# EUROPEAN PATENT APPLICATION

(11) **EP 4 660 849 A1**
(43) Date of publication of application: **10.12.2025**
(21) Application number: 24829812.7
(22) Date of filing: 05.02.2024
(51) Int. Cl.: G06F 16/957

(54) **PAGE DISPLAY METHOD, ELECTRONIC DEVICE AND STORAGE MEDIUM**

(30) Priority: 25.06.2023 CN 202310757457
(71) Applicant: Huawei Technologies Co., Ltd., Shenzhen, Guangdong 518129 (CN)
(72) Inventor: YANG, Shimiao, Shenzhen, Guangdong 518129 (CN); TAO, Zhuowei, Shenzhen, Guangdong 518129 (CN)
(74) Representative: Maiwald GmbH
(86) International application number: PCT/CN2024/075895
(87) International publication number: WO 2025/001152

(57) **Abstract**

This application provides a page display method, an electronic device, and a storage medium. The method includes: determining, in response to detecting that a page in an application is opened, whether a Webview of the application is a built-in Webview of the application; and if it is determined that the Webview of the application is the built-in Webview of the application, injecting a script file into the Webview of the application, where the script file is used to process the page. The method provided in this application helps improve page browsing experience of a user.

## Description

This application claims priority to Chinese Patent Application No. 202310757457.6, filed with the China National Intellectual Property Administration on June 25, 2023 and entitled "PAGE DISPLAY METHOD, ELECTRONIC DEVICE, AND STORAGE MEDIUM", which is incorporated herein by reference in its entirety.

### TECHNICAL FIELD

This application relates to the field of intelligent terminals, and in particular, to a page display method, an electronic device, and a storage medium.

### BACKGROUND

With continuous development of electronic technologies, screen forms of electronic devices (for example, mobile phones) are increasingly diversified. Currently, a large portion of electronic devices are configured with foldable displays. When a foldable display of an electronic device is in an unfolded state, a screen size increases. However, in some scenarios, content displayed on the foldable display in the unfolded state may be less than content displayed on the foldable display in a folded state, and even some layout elements may exceed a screen boundary. As a result, user operations are affected, and an advantage of a large screen of the foldable display cannot be fully utilized.

To resolve the foregoing problems, a vendor usually performs adaptation on its own or a system provides an adaptive adaptation capability. For example, a WebUI adaptive technology may scale down and rearrange page elements, so that a page can accommodate more information. This can resolve, to some extent, problems such as user inoperability or layout overlapping caused by enlargement of page elements.

However, currently, applications developed by different vendors have their own Webview kernels, but the WebUI adaptive technology is a non-open-source technology. As a result, the WebUI adaptive technology cannot be used in Webview kernels of different vendors, and user experience on the foldable display is still poor.

### SUMMARY

This application provides a page display method, an electronic device, and a storage medium. This helps improve page browsing experience of a user.

According to a first aspect, this application provides a page display method. The method includes: determining, in response to detecting that a page in an application is opened, whether a Webview of the application is a built-in Webview of the application; and if it is determined that the Webview of the application is the built-in Webview of the application, injecting a script file into the Webview of the application, where the script file is used to process the page.

In this application, whether the Webview is built in the application is identified, and when the application is built with the Webview, the script file is injected. In this way, a page can be adaptively laid out or debugged by using the script file, improving page browsing experience of a user.

In a possible implementation, the script file is a bootstrap file, and that the script file is used to process the page includes: The bootstrap file is used to guide injection of an adaptive layout plug-in, and the adaptive layout plug-in is used to adaptively lay out the page.

In a possible implementation, after injecting the script file into the Webview of the application, the method further includes: determining whether the adaptive layout plug-in needs to be injected into the page; and if it is determined that the adaptive layout plug-in needs to be injected into the page, injecting the adaptive layout plug-in into the page by using the bootstrap file.

In a possible implementation, determining whether the adaptive layout plug-in needs to be injected into the page includes: obtaining information preconfigured in a system, where the information preconfigured in the system includes an allowlist address; and if a network address of the page matches the allowlist address, determining that the adaptive layout plug-in needs to be injected into the page.

In a possible implementation, the script file is a debugging tool, and that the script file is used to process the page includes: The debugging tool is used to debug the page.

In a possible implementation, determining, in response to detecting that the page in the application is opened, whether the Webview of the application is the built-in Webview of the application includes: in response to detecting that the page in the application is opened, obtaining related information and an instance of the Webview of the application; and determining, based on the related information and the instance of the Webview of the application, that the Webview of the application is the built-in Webview of the application.

In a possible implementation, determining, based on the related information and the instance of the Webview of the application, that the Webview of the application is the built-in Webview of the application includes: if a Webview type corresponding to the related information and the instance of the Webview of the application is a non-system kernel type, determining that the Webview of the application is the built-in Webview of the application.

In a possible implementation, the related information of the Webview of the application includes a package name or a class name of the Webview of the application.

According to a second aspect, this application provides a page display apparatus, including one or more functional modules, where the one or more functional modules are configured to implement the page display method according to the first aspect.

According to a third aspect, this application provides an electronic device, including a processor and a memory. The memory is configured to store a computer program, and the processor is configured to run the computer program, to implement the page display method according to the first aspect.

According to a fourth aspect, this application provides a computer-readable storage medium. The computer-readable storage medium stores a computer program, and when the computer program is run on a computer, the computer is enabled to implement the page display method according to the first aspect.

According to a fifth aspect, this application provides a computer program. When the computer program is run on a processor of an electronic device, the electronic device is enabled to perform the page display method according to the first aspect.

In a possible design, some or all of the programs in the fifth aspect may be stored in a storage medium packaged together with a processor, or may be stored in a memory not packaged together with a processor.

### BRIEF DESCRIPTION OF DRAWINGS

FIG. 1 is a diagram of a structure of an electronic device according to an embodiment of this application;
FIG. 2 is a diagram of a system architecture according to an embodiment of this application;
FIG. 3 is a schematic flowchart of an embodiment of a page display method according to this application;
FIG. 4 is a diagram of a UI layout architecture according to an embodiment of this application; and
FIG. 5 is a diagram of a structure of an embodiment of a page display apparatus according to this application.

### DESCRIPTION OF EMBODIMENTS

In embodiments of this application, unless otherwise specified, the character "/" indicates an "or" relationship between associated objects. For example, A/B may represent A or B. The term "and/or" describes an association relationship between associated objects, and represents that three relationships may exist. For example, A and/or B may represent the following three cases: Only A exists, both A and B exist, and only B exists.

It should be noted that, in embodiments of this application, terms such as "first" and "second" are merely intended for distinction in description, and shall not be understood as an indication or implication of relative importance or an implicit indication of a quantity of indicated technical features, or an indication or implication of a sequence.

In embodiments of this application, "at least one" means one or more, and "a plurality of" means two or more. In addition, "at least one of the following items (pieces)" or a similar expression thereof means any combination of these items, including a single item (piece) or any combination of a plurality of items (pieces). For example, at least one item (piece) of A, B, or C may represent A, B, C, A and B, A and C, B and C, or A, B, and C. A, B, and C each may be an element, or may be a set that includes one or more elements.

In embodiments of this application, "example", "in some embodiments", "in another embodiment", or the like represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "of (of)", "corresponding (corresponding, relevant)", and "corresponding (corresponding)" may be interchangeably used sometimes. It should be noted that meanings expressed by the terms are consistent when differences are not emphasized. In embodiments of this application, communication and transmission may be interchangeably used sometimes. It should be noted that meanings expressed by the terms are consistent when differences are not emphasized. For example, transmission may include sending and/or receiving, and may be a noun or a verb.

In embodiments of this application, "equal to" may be used together with "greater than", and is applicable to a technical solution used in a case of "greater than"; or may be used together with "less than", and is applicable to a technical solution used in a case of "less than". It should be noted that, when "equal to" is used together with "greater than", "equal to" shall not be used together with "less than"; and when "equal to" is used together with "less than", "equal to" shall not be used together with "greater than".

With continuous development of electronic technologies, screen forms of electronic devices (for example, mobile phones) are increasingly diversified. Currently, a large portion of electronic devices are configured with foldable displays. When a foldable display of an electronic device is in an unfolded state, a screen size increases. However, in some scenarios, content displayed on the foldable display in the unfolded state may be less than content displayed on the foldable display in a folded state, and even some layout elements may exceed a screen boundary. As a result, user operations are affected, and an advantage of a large screen of the foldable display cannot be fully utilized.

To resolve the foregoing problems, a vendor usually performs adaptation on its own or a system provides an adaptive adaptation capability. For example, a WebUI adaptive technology may scale down and rearrange page elements, so that a page can accommodate more information. This can resolve, to some extent, problems such as user inoperability or layout overlapping caused by enlargement of page elements.

However, currently, applications developed by different vendors have their own Webview kernels, but the WebUI adaptive technology is a non-open-source technology. As a result, the WebUI adaptive technology cannot be used in Webview kernels of different vendors, and user experience on the foldable display is still poor.

Based on the foregoing problem, an embodiment of this application provides a page display method, applied to an electronic device. This can improve page browsing experience of a user.

The electronic device may be a mobile terminal having a foldable display. The mobile terminal may also be referred to as a terminal device, user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The mobile terminal may be a station (STATION, ST) in a WLAN; or may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device or another processing device connected to a wireless modem, a vehicle-mounted device, an Internet of Vehicles terminal, a computer, a laptop computer, a handheld communication device, a handheld computing device, a satellite radio device, a wireless modem card, a television set top box (set top box, STB), customer premises equipment (customer premises equipment, CPE), and/or another device configured to perform communication in a wireless system, or a mobile terminal in a next-generation communication system like a 5G network, or a mobile terminal in a future evolved public land mobile network (Public Land Mobile Network, PLMN), or the like.

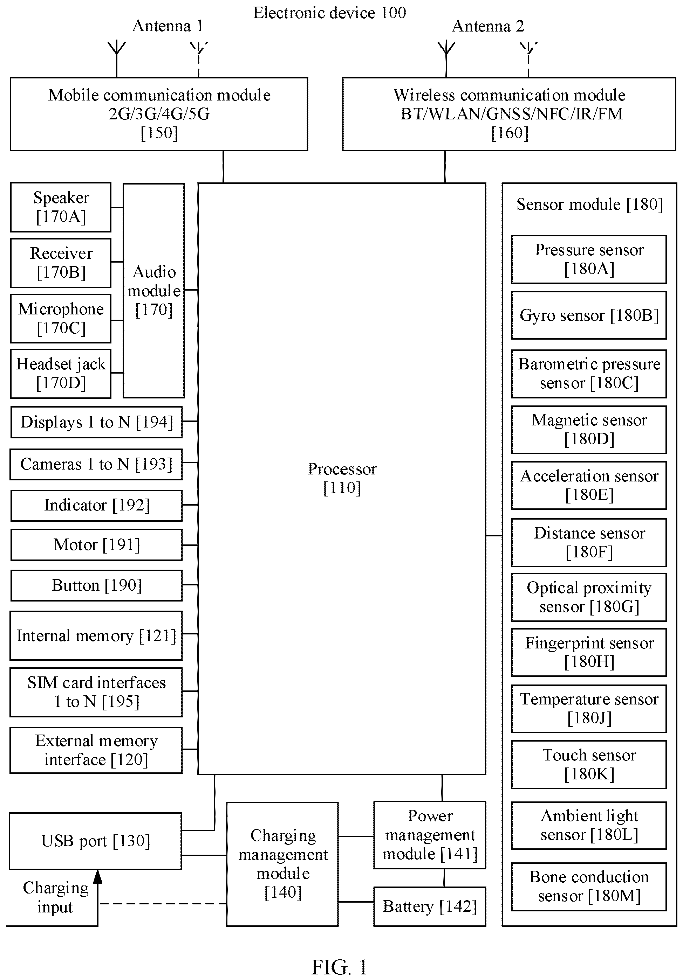

FIG. 1 first shows a diagram of an example of a structure of an electronic device 100.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetch and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts data to be transmitted between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 via the CSI, to implement a photographing function of the electronic device 100. The processor 110 communicates with the display 194 via the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, a MIPI interface, or the like.

The USB port 130 is an interface that conforms to a USB standard specification, and may be specifically a mini USB port, a micro USB port, a USB type-C port, or the like. The USB port 130 may be configured to connect to a charger to charge the electronic device 100, or may be configured to transmit data between the electronic device 100 and a peripheral device, or may be configured to connect to a headset for playing audio through the headset. The interface may be further configured to connect to another terminal device, for example, an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the electronic device 100. When charging the battery 142, the charging management module 140 may further supply power to the terminal device by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution applied to the electronic device 100 for wireless communication including 2G/3G/4G/5G and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global satellite positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based enhancement system (satellite-based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. Based on a structure of a biological neural network, for example, a transmission mode between neurons in a human brain, the NPU quickly processes input information and can further continuously perform self-learning. Applications such as intelligent cognition of the electronic device 100 may be implemented through the NPU, for example, image recognition, facial recognition, speech recognition, and text understanding.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an electrical audio signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (Cellular Telecommunications Industry Association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on a messaging application icon, an instruction for viewing an SMS message is performed. When a touch operation whose touch operation intensity is greater than or equal to the first pressure threshold is performed on the messaging application icon, an instruction for creating an SMS message is performed.

The gyro sensor 180B may be configured to determine a moving posture of the electronic device 100. In some embodiments, an angular velocity of the electronic device 100 around three axes (namely, axes x, y, and z) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the terminal device, and is used in, for example, switching between a landscape mode and a portrait mode, or an application, for example, a pedometer.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

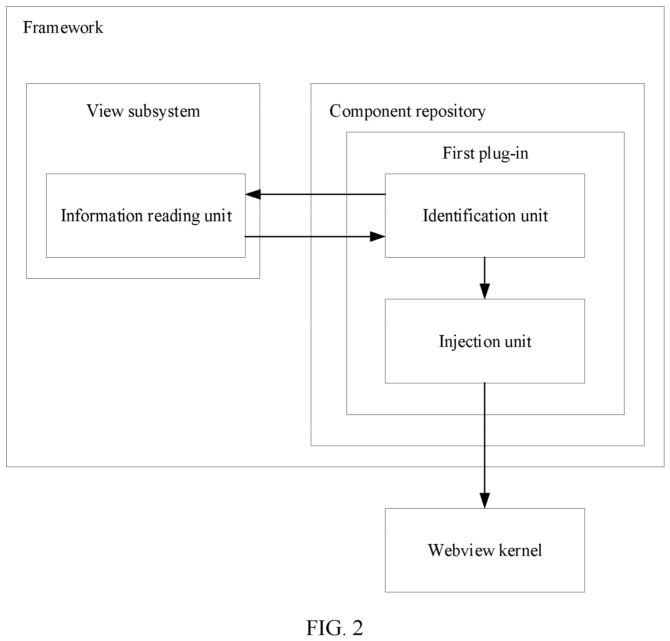

The following describes, with reference to FIG. 2 to FIG. 4, a page display method provided in embodiments of this application.

FIG. 2 is a diagram of a system architecture according to an embodiment of this application. Refer to FIG. 2. An electronic device may include a framework (Framework) and a Webview kernel. The framework may be a framework of an Android system, or a framework of another operating system. This is not specially limited in embodiments of this application.

The Android system is used as an example. The framework may include a View subsystem, where the View subsystem is used to manage a user interface (User Interface, UI) interface of an application. The View subsystem may include an information reading unit, where the information reading unit may be configured to read related information of a View object. The View object may be understood as a basic UI component in an operating system, and is configured to display the user interface.

The framework may further include a component repository, where the component repository may include a first plug-in. The first plug-in may include an identification unit and an injection unit. The identification unit is configured to request the related information of the View object from the information reading unit. Then, after receiving the request, the information reading unit may return the corresponding related information of the View object to the identification unit, and may identify the returned related information of the View object.

When the identification unit identifies a built-in view object of the application, the injection unit may be invoked, to enable the injection unit to inject a script file into the built-in view object of the application.

The script file may be a bootstrap file. A second plug-in may be injected by using the bootstrap file, to adaptively adjust a page by using the second plug-in. The second plug-in may be an adaptive layout plug-in. When a page layout of a current page needs to be adaptively adjusted, the adaptive layout plug-in may be injected by using the bootstrap file, to adaptively adjust the current page.

In some optional embodiments, the script file may alternatively be a debugging tool, and a currently displayed page may be debugged by using the debugging tool.

It may be understood that the script file may alternatively be another type of file or tool. This is not specially limited in embodiments of this application.

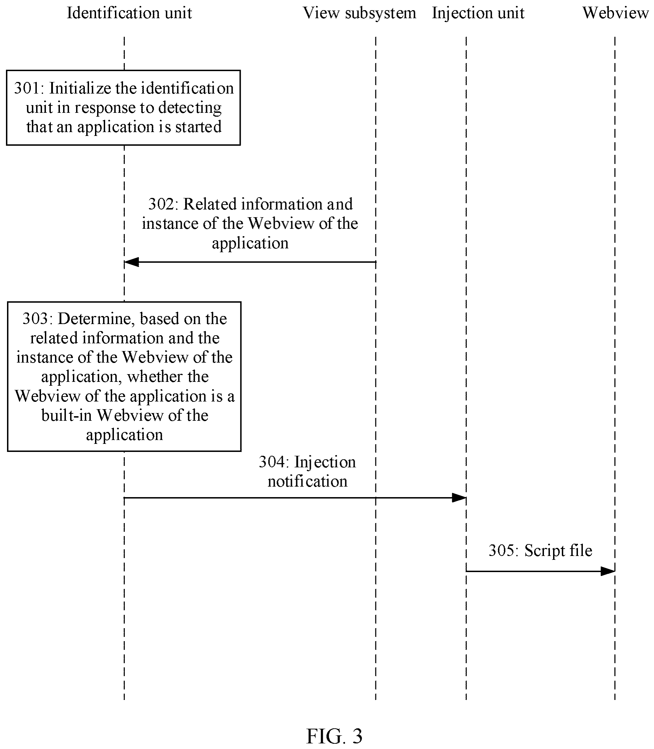

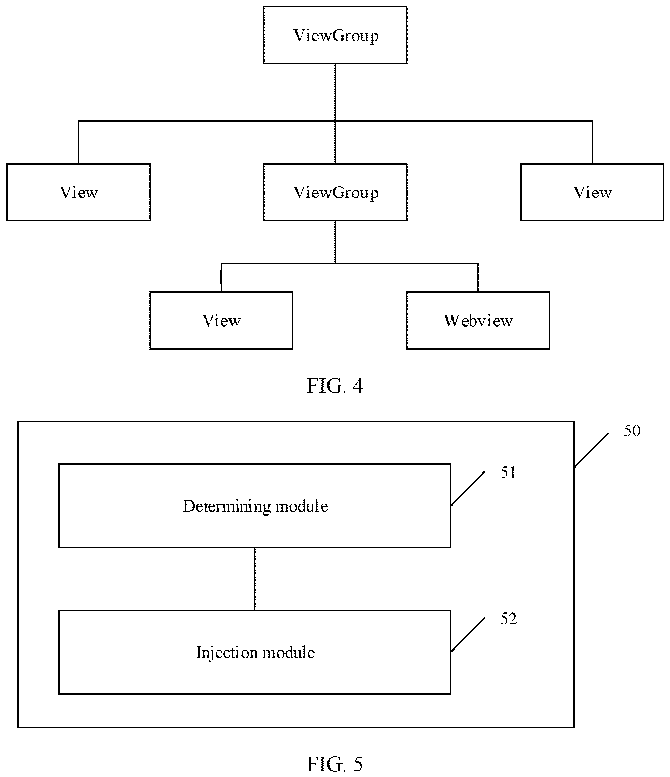

With reference to FIG. 3 and FIG. 4, the following describes the page display method provided in embodiments of this application by using the Android system as an example. It may be understood that although the Android system is used as an example for description in embodiments of this application, this does not constitute a limitation on embodiments of this application, and the page display method provided in this application may also be applied to another operating system.

FIG. 3 is a schematic flowchart of an embodiment of a page display method according to this application. The method specifically includes the following steps.

Step 301: Initialize an identification unit in response to detecting that an application is started.

Specifically, after a user starts the application, the identification unit may be initialized in a loading phase of the application.

For example, the identification unit may inject an information reading unit into an addView method of a ViewGroup in a View subsystem. In other words, the identification unit may load the information reading unit into the addView method of the ViewGroup in the View subsystem, so that the information reading unit waits to be triggered, to initialize the identification unit. The ViewGroup is a type of UI component in the Android operating system, and the ViewGroup is configured to manage a layout and display of another type of UI component (for example, a View). The ViewGroup may include a View and a ViewGroup, so that a hierarchical UI layout structure shown in FIG. 4 can be formed.

Refer to FIG. 4. For a ViewGroup of each node, the ViewGroup may include one or more Views and one or more ViewGroups, so that a UI layout of a tree-shaped structure can be formed. The UI layout may also be referred to as a widget tree or a component tree. A Webview is a subclass of a View.

The information reading unit is configured to: read related information of a View object, capture an instance of the View object, and feed back the related information of the View object and the instance of the View object to the identification unit.

Step 302: In response to detecting that a page in the application is opened, the View subsystem obtains related information and an instance of a Webview of the application, and sends the related information and the instance of the Webview of the application to the identification unit; and correspondingly, the identification unit receives the related information and the instance of the Webview of the application that are sent by the View subsystem.

Specifically, the page may be a web page, or another type of page. This is not specially limited in embodiments of this application.

For example, after starting the application, the user may tap any icon on a home page to open a page. In response to detecting that the page in the application is opened, the View subsystem may obtain the related information and the instance of the Webview of the application, and may send the related information and the instance of the Webview of the application to the identification unit.

The Webview of the application is a Webview corresponding to the current application.

It may be understood that, after the application starts to load the page, a loading phase of the View subsystem may be entered, and the View subsystem may load the View object. During loading of the View object, a widget tree may be traversed, to compute a location and a size of each View object in a parent container. For the widget tree, refer to the UI layout structure shown in FIG. 4. Details are not described herein again.

During traversal of the widget tree, the Webview of the application may be obtained through traversal. Then, an addView method of the parent container may be invoked to add the Webview of the application to the parent container. The information reading unit may be triggered by using the foregoing addView method. The information reading unit may collect the related information of the Webview of the application, and may feed back the related information of the Webview of the application and an instance of a View object to the identification unit.

After the user opens the web page in the application, the system may obtain the Webview of the application through traversal, and then perform the addView method on the Webview of the application to trigger the information reading unit, to obtain the related information and the instance of the Webview of the application.

Step 303: The identification unit determines, based on the related information and the instance of the Webview of the application, whether the Webview of the application is a built-in Webview of the application.

Specifically, after receiving the related information and the instance of the Webview of the application, the identification unit may determine, based on the related information and the instance of the Webview of the application, whether the Webview of the application is the built-in Webview of the application.

For example, the related information of the Webview of the application may include a package name (package name) or a class name (class name).

It may be understood that the package name (package name) or the class name (class name) is merely an example for description, and does not constitute a limitation on embodiments of this application. In some embodiments, the related information of the Webview of the application may further include another type of information.

Then, it may be determined, based on the package name (package name) or the class name (class name) of the Webview, whether the Webview of the application is the built-in Webview of the application.

For example, a mapping relationship between a Webview type and a package name (package name) or a class name (class name) may be preset in the system. The mapping relationship between the Webview type and the package name (package name) or the class name (class name) may be shown in Table 1.

**Table 1**

| | UC kernel | XWeb kernel | X5 kernel | System kernel |
|---|---|---|---|---|
| Package name | com.uc.webvie w.export | com.tencent.s mtt.sdk | com.tencent.s mtt.sdk | android.web kit |
| Class name | com.uc.webvie w.export.Webview | com.tencent.s mtt.sdk. Webview | com.tencent.s mtt.sdk. Webview | Android.web kit. Webview |

Refer to Table 1. The UC kernel, the XWeb kernel, and the X5 kernel are built-in Webview kernels of the application, and the system kernel is a built-in Webview kernel of the system.

It may be understood that the UC kernel, the XWeb kernel, and the X5 kernel are merely examples for description, and do not constitute a limitation on embodiments of this application. In some embodiments, another type of built-in Webview kernel of the application may be further included.

After the package name (package name) or the class name (class name) of the Webview of the application is obtained, whether a corresponding Webview type can be found may be determined based on, for example, the mapping relationship in Table 1.

If the Webview of the application successfully matches one of the UC kernel, the XWeb kernel, and the X5 kernel according to, for example, the mapping relationship in Table 1, it may be determined that the Webview of the application is the built-in Webview of the application. Alternatively, if the Webview of the application does not successfully match any one of the kernels according to, for example, the mapping relationship in Table 1, in other words, the Webview matches none of the UC kernel, the XWeb kernel, the X5 kernel, and the system, it may be determined that the Webview of the application is the built-in Webview of the application.

It may be understood that, if the Webview of the application successfully matches the system kernel according to, for example, the mapping relationship in Table 1, it may be determined that the Webview of the application is not the built-in Webview of the application.

Step 304: The identification unit sends an injection notification to an injection unit, to notify the injection unit to inject a script file; and correspondingly, the injection unit receives the injection notification sent by the identification unit.

Specifically, after determining that the Webview of the application is the built-in Webview of the application, the identification unit may send the injection notification to the injection unit, where the injection notification notifies the injection unit to inject the script file into the Webview of the application. The injection notification may include the instance of the Webview of the application. For example, the Webview of the application is the UC kernel, and the injection unit may be notified of an instance of the UC kernel.

Step 305: The injection unit injects the script file into the Webview of the application.

Specifically, after receiving the injection notification, the injection unit may inject the script file into the Webview of the application. The script file is used to process the currently displayed page.

In some optional embodiments, the script file may be a bootstrap file, and the bootstrap file may be used to guide injection of a second plug-in. For example, the second plug-in may be an adaptive layout plug-in, and the adaptive layout plug-in may be used to adaptively adjust the page.

The second plug-in may be injected as required. For example, information preconfigured in a system may be obtained by using a system interface. The information preconfigured in the system may be an allowlist file preconfigured in an electronic device, and the allowlist file may record information about a specific page that needs insertion of the second plug-in.

Then, the injection unit may obtain the bootstrap file, and inject the bootstrap file and the information preconfigured in the system into the Webview of the application. The bootstrap file may be preconfigured in a plug-in APK, or another system file. This is not specially limited in embodiments of this application.

It may be understood that the injection unit may obtain an injection interface of the Webview instance of the application through a reflection mechanism, and may inject the bootstrap file and the information preconfigured in the system into the Webview of the application through the injection interface.

In some optional embodiments, the injection unit may further integrate the bootstrap file and the information preconfigured in the system, and may inject integrated information into the Webview of the application. Integration may be performed through placeholder replacement, or in another manner. This is not specially limited in embodiments of this application.

A network address of the current page may be obtained by using the bootstrap file injected into the Webview of the application. For example, the network address may be a uniform resource locator (Uniform Resource Locator, URL). In some embodiments, the network address may alternatively be indicated by another identifier. This is not specially limited in embodiments of this application.

Then, the address (for example, a URL) of the page may be matched with an address in the allowlist in the information preconfigured in the system.

If there is an address in the allowlist in the information preconfigured in the system matching the address of the current page, the bootstrap file may inject the second plug-in into the current page, so that the second plug-in may process the page after loading of the page is completed. For example, the second plug-in is an adaptive layout plug-in. When the adaptive layout plug-in is inserted into the current page by using the bootstrap file, and after loading of the current page is completed, the adaptive layout plug-in may adaptively rearrange the current page.

It may be understood that a manner of matching the address in the allowlist with the address of the page may be exact matching or prefix matching. This is not specially limited in embodiments of this application.

In some optional embodiments, the script file may alternatively be a debugging tool, and the current page may be debugged by using the debugging tool.

FIG. 5 is a diagram of a structure of an embodiment of a page display apparatus according to this application. As shown in FIG. 5, a page display apparatus 50 may include a determining module 51 and an injection module 52.

The determining module 51 is configured to determine, in response to detecting that a page in an application is opened, whether a Webview of the application is a built-in Webview of the application.

The injection module 52 is configured to: if it is determined that the Webview of the application is the built-in Webview of the application, injecting a script file into the Webview of the application, where the script file is used to process the page.

In a possible implementation, the script file is a bootstrap file, the bootstrap file is used to guide injection of an adaptive layout plug-in, and the adaptive layout plug-in is used to adaptively lay out the page.

In a possible implementation, the injection module 52 is further configured to: determine whether the adaptive layout plug-in needs to be injected into the page; and
if it is determined that the adaptive layout plug-in needs to be injected into the page, inject the adaptive layout plug-in into the page by using the bootstrap file.

In a possible implementation, the injection module 52 is further configured to: obtain information preconfigured in a system, where the information preconfigured in the system includes an allowlist address; and
if a network address of the page matches the allowlist address, determine that the adaptive layout plug-in needs to be injected into the page.

In a possible implementation, the script file is a debugging tool, and the debugging tool is used to debug the page.

In a possible implementation, the determining module 51 is further configured to: in response to detecting that the page in the application is opened, obtain related information and an instance of the Webview of the application; and detect that a page in the application is opened; and
determine, based on the related information and the instance of the Webview of the application, that the Webview of the application is the built-in Webview of the application.

In a possible implementation, the determining module 51 is further configured to: if a Webview type corresponding to the related information and the instance of the Webview of the application is a non-system kernel type, determine that the Webview of the application is the built-in Webview of the application.

In a possible implementation, the related information of the Webview of the application includes a package name or a class name of the Webview of the application.

The page display apparatus 50 provided in the embodiment shown in FIG. 5 may be configured to perform the technical solution in the method embodiment in this application. For an implementation principle and a technical effect of the page display apparatus, further refer to related descriptions in the method embodiment.

It should be understood that division of modules in the page display apparatus 50 shown in FIG. 5 is merely logical function division. During actual implementation, some or all of the modules may be integrated into one physical entity, or may be physically separated. In addition, the modules may be all implemented in a form of software invoking processing elements; or the modules may be all implemented in a form of hardware; or some modules may be implemented in a form of software invoking processing elements, and some modules may be implemented in a form of hardware. For example, the detection module may be an independently disposed processing element, or may be integrated in one chip of an electronic device for implementation. Implementations of other modules are similar. In addition, all or some of the modules may be integrated, or may be implemented independently. In an implementation process, steps in the foregoing methods or the foregoing modules can be implemented by using a hardware integrated logic circuit in the processing element, or by using instructions in a form of software.

For example, the foregoing modules may be one or more integrated circuits configured to implement the foregoing method, for example, one or more application-specific integrated circuits (Application-Specific Integrated Circuits, ASICs for short), or one or more microprocessors (Digital Signal Processors, DSPs for short) or one or more field programmable gate arrays (Field Programmable Gate Arrays, FPGAs for short) and the like. For another example, the modules may be integrated together and implemented in a form of a system-on-a-chip (System-On-a-Chip, SOC for short).

In the foregoing embodiments, related processors may include, for example, a CPU, a DSP, a microcontroller, or a digital signal processor, and may further include a GPU, an embedded neural-network processing unit (Neural-network Processing Unit, NPU for short), and an image signal processor (Image Signal Processing, ISP for short). The processors may further include a necessary hardware accelerator or logic processing hardware circuit, for example, an ASIC, or one or more integrated circuits configured to control program execution of the technical solutions of this application. In addition, the processors may have a function of operating one or more software programs, and the software programs may be stored in a storage medium.

An embodiment of this application further provides a computer-readable storage medium. The computer-readable storage medium stores a computer program. When the computer program is run on a computer, the computer is enabled to perform the method provided in embodiments of this application.

An embodiment of this application further provides a computer program product. The computer program product includes a computer program. When the computer program is run on a computer, the computer is enabled to perform the method provided in embodiments of this application.

In embodiments of this application, "at least one" means one or more, and "a plurality of' means two or more. The term "and/or" describes an association relationship for describing associated objects and represents that three relationships may exist. For example, A and/or B may represent the following cases: Only A exists, both A and B exist, and only B exists. A and B may be singular or plural. The character "/" generally indicates an "or" relationship between the associated objects. In addition, "at least one of the following items" or a similar expression thereof means any combination of these items, including a single item or any combination of a plurality of items. For example, at least one of a, b, or c may indicate a, b, c, a and b, a and c, b and c, or a, b, and c, where a, b, and c may be singular or plural.

A person of ordinary skill in the art may be aware that the units and algorithm steps described in embodiments disclosed in this specification can be implemented by using electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In several embodiments provided in this application, when any function is implemented in a form of a software functional unit and sold or used as an independent product, the function may be stored on a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM for short), a random access memory (Random Access Memory, RAM for short), a magnetic disk, or an optical disc.

The foregoing descriptions are merely specific implementations of this application. Any variation or replacement readily figured out by a person skilled in the art within the technical scope disclosed in this application shall fall within the protection scope in this application. Therefore, the protection scope of this application shall be subject to the protection scope of the claims.

## Claims

1. A page display method, wherein the method comprises:
determining, in response to detecting that a page in an application is opened, whether a Webview of the application is a built-in Webview of the application; and
if it is determined that the Webview of the application is the built-in Webview of the application, injecting a script file into the Webview of the application, wherein the script file is used to process the page.

2. The method according to claim 1, wherein the script file is a bootstrap file, and that the script file is used to process the page comprises:
the bootstrap file is used to guide injection of an adaptive layout plug-in, and the adaptive layout plug-in is used to adaptively lay out the page.

3. The method according to claim 2, wherein after injecting the script file into the Webview of the application, the method further comprises:
determining whether the adaptive layout plug-in needs to be injected into the page; and
if it is determined that the adaptive layout plug-in needs to be injected into the page, injecting the adaptive layout plug-in into the page by using the bootstrap file.

4. The method according to claim 3, wherein determining whether the adaptive layout plug-in needs to be injected into the page comprises:
obtaining information preconfigured in a system, wherein the information preconfigured in the system comprises an allowlist address; and
if a network address of the page matches the allowlist address, determining that the adaptive layout plug-in needs to be injected into the page.

5. The method according to claim 1, wherein the script file is a debugging tool, and that the script file is used to process the page comprises:
the debugging tool is used to debug the page.

6. The method according to any one of claims 1 to 5, wherein determining, in response to detecting that the page in the application is opened, whether the Webview of the application is the built-in Webview of the application comprises:
in response to detecting that the page in the application is opened, obtaining related information and an instance of the Webview of the application; and
determining, based on the related information and the instance of the Webview of the application, that the Webview of the application is the built-in Webview of the application.

7. The method according to claim 6, wherein determining, based on the related information and the instance of the Webview of the application, that the Webview of the application is the built-in Webview of the application comprises:
if a Webview type corresponding to the related information and the instance of the Webview of the application is a non-system kernel type, determining that the Webview of the application is the built-in Webview of the application.

8. The method according to claim 7, wherein the related information of the Webview of the application comprises a package name or a class name of the Webview of the application.

9. An electronic device, comprising a processor and a memory, wherein the memory is configured to store a computer program, and the processor is configured to run the computer program, to implement the page display method according to any one of claims 1 to 8.

10. A computer-readable storage medium, wherein the computer-readable storage medium stores a computer program, and when the computer program is run on a computer, the page display method according to any one of claims 1 to 8 is implemented.
